# EUROPEAN PATENT APPLICATION

(11) **EP 4 568 286 A1**
(43) Date of publication of application: **11.06.2025**
(21) Application number: 24214371.7
(22) Date of filing: 21.11.2024
(51) Int. Cl.: H04R 25/00

(54) **WIRELESS COMMUNICATION APPARATUS FOR HEARING AID AND WIRELESS COMMUNICATION SYSTEM OF HEARING AID**

(30) Priority: 06.12.2023 CN 202311660376
(71) Applicant: Yealink (Xiamen) Network Technology Co., Ltd., Xiamen City, Fujian 361009 (CN)
(72) Inventor: FENG, Wanjian, Xiamen City, Fujian, 361009 (CN)
(74) Representative: Meyer, Thorsten

(57) **Abstract**

The present disclosure provides a wireless communication apparatus for a hearing aid. The wireless communication apparatus is connected with a portable terminal and includes: a first wireless communication module and a first communication interface. The wireless communication apparatus may be in wireless communication with the hearing aid by means of the first wireless communication module. The wireless communication apparatus may be connected with the portable terminal by means of the first communication interface and obtain electric energy from the portable terminal by means of the first communication interface. Compared with the prior art, the wireless communication apparatus can improve sound signals of the hearing aid without increasing the power consumption of the hearing aid and solve the problems of the endurance capability and portability of the wireless communication apparatus, bringing about great convenience for a patient with a hearing impairment in use.

## Description

### CROSS-REFERENCE TO RELATED APPLICATIONS

The present application claims the benefit of Chinese Patent Application No. 2023116603760 filed on December 6, 2023, the contents of which are hereby incorporated by reference.

### TECHNICAL FIELD

The present disclosure relates to the technical field of hearing aids, and in particular, to a wireless communication apparatus for a hearing aid and a wireless communication system of a hearing aid.

### BACKGROUND

A hearing aid is an instrument aiding in hearing, and can amplify sound that is originally inaudible to a patient with a hearing impairment and thus improve the hearing impairment of the patient. Depending on shapes, hearing aids are generally classified as behind-the-ear hearing aids, in-the-ear hearing aids, pocket hearing aids, etc. With the development of hearing aids and with the popularity of smart products, since a hearing aid needs to directly receive sound played by a smart product in many scenarios, the experience of a patient with a hearing impairment using the hearing aid is poor. For example, when a hearing aid directly receives sound played by a mobile phone, a sound signal played needs to be converted into an electrical signal again such that the sound is greatly distorted and difficult to discriminate. Alternatively, when watching TV with family, a patient with a hearing impairment often needs to turn up the volume of the TV so that the sound can be received by a hearing aid. This will affect the experience of other family members watching the TV Therefore, how to combine a hearing aid and a smart product to enable a patient with a hearing impairment to better receive the sound of the smart product such as a mobile phone and a TV has become a problem needing to be urgently solved.

At present, there are two solutions to address such a problem. One is that the hearing aid directly has a wireless communication module such as a Bluetooth module, enabling an audio signal to be transmitted from the smart product to the hearing aid in a wireless communication manner. However, the Bluetooth communication module has high power consumption and thus affects the endurance capability of the hearing aid. The other one is to add a repeater between the hearing aid and the smart product. However, the patient with the hearing impairment needs to take along the repeater all the time. The portability is poor. In addition to the consideration of the endurance capability of the hearing aid, the power of the repeater needs to be maintained to guarantee that the wireless communication proceeds. It is extremely inconvenient for the patient with the hearing impairment to use the repeater.

Therefore, there is an urgent need for a wireless communication apparatus of a hearing aid and a hearing aid system that will not increase the power consumption of the hearing aid and bring about inconvenience for a patient with a hearing impairment in use while improving sound signals.

### SUMMARY

The present disclosure provides a wireless communication apparatus for a hearing aid and a wireless communication system of a hearing aid. The wireless communication apparatus may improve sound signals of the hearing aid without increasing the power consumption of the hearing aid and solve the problem of the endurance capability of the wireless communication apparatus, bringing about great convenience for a patient with a hearing impairment in use.

To achieve the above objective, the present disclosure provides a wireless communication apparatus for a hearing aid. The wireless communication apparatus is connected with a portable terminal and includes: a first wireless communication module and a first communication interface. The wireless communication apparatus may be in wireless communication with the hearing aid by means of the first wireless communication module. The wireless communication apparatus may be connected with the portable terminal by means of the first communication interface and obtain electric energy from the portable terminal by means of the first communication interface.

As a preferred solution, the wireless communication apparatus is in wireless communication with at least one external smart device by means of a second wireless communication module on the wireless communication apparatus.

As a preferred solution, the wireless communication apparatus is in wireless communication with at least one external smart device by means of a third wireless communication module on the portable terminal.

As a preferred solution, the portable terminal includes a program configured to acquire a user instruction to control the wireless communication between the wireless communication apparatus and the external smart device.

As a preferred solution, the program is downloaded and installed to the portable terminal by means of the first communication interface.

As a preferred solution, the first wireless communication module, the second wireless communication module, and the third wireless communication module adopt short-range wireless transmission techniques.

As a preferred solution, the short-range wireless transmission technique of the first wireless communication module is different from the short-range wireless transmission technique of the second wireless communication module. The short-range wireless transmission technique of the first wireless communication module is different from the short-range wireless transmission technique of the third wireless communication module.

As a preferred solution, the first wireless communication module adopts a low power wireless transmission technique.

As a preferred solution, the wireless communication apparatus includes a rechargeable battery which is at least partially rechargeable by the electric energy obtained from the portable terminal.

As a preferred solution, the first wireless communication module is a wireless transmitter configured to send data received by the wireless communication apparatus to a wireless receiver of the hearing aid; and
the second wireless communication module is a wireless receiver configured to receive data sent by a wireless transmitter of the at least one external smart device.

As a preferred solution, the first wireless communication module is a wireless transmitter configured to send data received by the portable terminal to a wireless receiver of the hearing aid; and the third wireless communication module is a wireless receiver configured to receive data sent by a wireless transmitter of the at least one external smart device.

The present disclosure further provides a wireless communication system of a hearing aid, including at least: the wireless communication apparatus for a hearing aid as described above, a portable terminal, a hearing aid, and an external smart device. The wireless communication apparatus is connected with the portable terminal; the wireless communication apparatus is in wireless communication with the hearing aid; and the portable terminal is in wireless communication with the external smart device.

Compared with the prior art, the embodiments of the present disclosure have following beneficial effects:
The present disclosure provides a wireless communication apparatus for a hearing aid. The wireless communication apparatus is connected with a portable terminal and includes: a first wireless communication module and a first communication interface. The wireless communication apparatus may be in wireless communication with the hearing aid by means of the first wireless communication module. The wireless communication apparatus may be connected with the portable terminal by means of the first communication interface and obtain electric energy from the portable terminal by means of the first communication interface. Compared with the prior art, the wireless communication apparatus of the present disclosure is directly connected with the portable terminal so as to directly obtain desired electric energy from the portable terminal. Therefore, the wireless communication apparatus does not need to be independently charged by a user. In addition, the wireless communication apparatus can be in direct wireless communication with the hearing aid. Therefore, the hearing aid can wirelessly receive an electric signal from the portable terminal and then convert the electric signal into an audio signal. One electric-acoustic-electric conversion process is reduced as compared with directly receiving the audio signal played by the portable terminal. Sound distortion caused by processing the audio signal for a plurality of times is reduced. Therefore, the wireless communication apparatus for a hearing aid and the wireless communication system of a hearing aid of the present application in the present disclosure may solve the problem of the endurance capability of the wireless communication apparatus while improving sound signals of the hearing aid, bringing about great convenience for a patient with a hearing impairment in use.

### BRIEF DESCRIPTION OF THE DRAWINGS

FIG. 1 is a structural schematic diagram of an embodiment of a wireless communication apparatus for a hearing aid provided by the present disclosure;
FIG. 2 is one implementation of an embodiment of a wireless communication apparatus for a hearing aid provided by the present disclosure;
FIG. 3 is a structural schematic diagram of another embodiment of a wireless communication apparatus for a hearing aid provided by the present disclosure;
FIG. 4 is one implementation of another embodiment of a wireless communication apparatus for a hearing aid provided by the present disclosure;
FIG. 5 is one implementation of another embodiment of a wireless communication apparatus for a hearing aid provided by the present disclosure; and
FIG. 6 is one implementation of another embodiment of a wireless communication apparatus for a hearing aid provided by the present disclosure.

### DETAILED DESCRIPTION

The technical solutions of the embodiments of the present disclosure are clearly and completely described below with reference to the drawings in the embodiments of the present disclosure. Apparently, the described embodiments are merely a part rather than all of the embodiments of the present disclosure. All other embodiments derived from the embodiments of the present disclosure by a person of ordinary skill in the art without creative efforts shall fall within the protection scope of the present disclosure.

### Example 1

To solve the above-mentioned problems, the present disclosure provides a wireless communication apparatus for a hearing aid. The wireless communication apparatus is directly connected with a portable terminal so as to directly obtain desired electric energy from the portable terminal, and does not need to be independently charged by a user. The wireless communication apparatus can be in direct wireless communication with the hearing aid. Sound distortion caused by processing an audio signal for a plurality of times is reduced. The problems of the endurance capability and portability of the wireless communication apparatus are solved while improving sound signals of the hearing aid, bringing about great convenience for a patient with a hearing impairment in use.

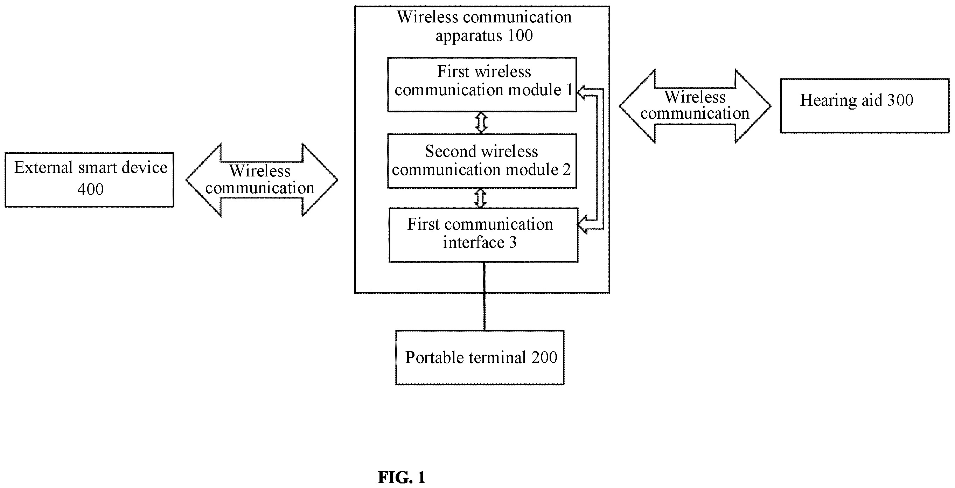

With reference to FIG. 1, there is shown an embodiment of a wireless communication apparatus 100 for a hearing aid. In this embodiment, the wireless communication apparatus 100 for a hearing aid is connected with a portable terminal 200. The wireless communication apparatus 100 includes: a first wireless communication module 1 and a first communication interface 3. The wireless communication apparatus 100 is in wireless communication with the hearing aid 300 by means of the first wireless communication module 1. The wireless communication apparatus 100 is physically connected with the portable terminal 200 by means of the first communication interface 3 and obtains electric energy from the portable terminal 200 by means of the first communication interface 3. Preferably, the wireless communication apparatus 100 may also be in wireless communication with at least one external smart device 400 by means of a second wireless communication module 2 on the wireless communication apparatus 100. The hearing aid 300 may be of a single-ear type, i.e., only one hearing aid included, or of a two-ear type, i.e., two hearing aids included. This embodiment takes the single-ear hearing aid as an example. The hearing aid 300 is selected depending on a hearing test result of a user given by an audiologist. According to the degree of hearing damage of the user, the type of the hearing aid is determined, such as a single-ear type, a two-ear type, a behind-the-ear type, an in-the-ear type, and an auditory meatus type.

Specifically, the working principle of the wireless communication apparatus is as follows: the wireless communication apparatus 100 may have two wireless communication modules. The first wireless communication module 1 is in wireless connection with the hearing aid 300 and can wirelessly transmit data on the portable terminal 200 to the hearing aid directly. For example, the first wireless communication module 1 includes a wireless transmitter configured to send data received by the wireless communication apparatus 100 to a wireless receiver of the hearing aid 300. The second wireless communication module 2 includes a wireless receiver configured to receive data sent by a wireless transmitter of at least one external smart device 400. For example, when the transmitted data is an audio signal, the hearing aid receives the audio signal and then processes the received audio signal by its own internal modules such as a sound processor and an amplifier such that a speech signal becomes clear. Meanwhile, background noise is reduced, and the speech signal is amplified by the amplifier and then finally transmitted to the ear of a patient having a hearing impairment through a receiver. The second wireless communication module 2 is in wireless communication with the external smart device 400 so that data on the external smart device 400 can be wirelessly transmitted to the wireless communication apparatus 100. The second wireless communication module 2 receives an audio signal from the external smart device 400, and demodulates and transmits the audio signal to the first wireless communication module 1. The first wireless communication module 1 modulates the received demodulated audio signal again and then sends the modulated signal to the hearing aid 300. The signal is processed by the hearing aid 300 and then transmitted to the ear of the patient. For example, the portable terminal 200 may be a portable smart audio device such as a smart phone or a tablet computer. The external smart device 400 may be a smart audio device having a wireless transmission function such as a television, a smart speaker, and a notebook computer. For example, when a patient uses a mobile phone to make a call or answer a call, the mobile phone transmits an audio signal received from a remote end to the wireless communication apparatus 100, e.g., to the wireless communication apparatus 100 through the first communication interface 3. The first wireless communication module 1 of the wireless communication apparatus 100 wirelessly transmits the audio signal to the hearing aid. The audio signal is processed by the hearing aid and then transmitted to the ear of the patient with the hearing impairment through the receiver of the hearing aid. For example, an audio signal of a television drama played on a television is wirelessly transmitted to the second wireless communication module 2 of the wireless communication apparatus 100. The second wireless communication module 2 receives and demodulates the audio signal, and then modulates and wirelessly transmits the demodulated audio signal to the hearing aid via the first wireless communication module 1. This transmission manner enables the audio signal to be wirelessly transmitted to the hearing aid directly for direct sound processing by the hearing aid and then played. Compared with the manner in which the sound signal played by the external smart device is directly acquired by the hearing aid, then converted into an electric signal for processing such as denoising and amplifying, and transmitted to the ear of the patient through a receiver, one electric-acoustic-electric conversion process is reduced, and sound distortion caused by processing the audio signal for a plurality of times is avoided. Meanwhile, the hearing aid can acquire the audio signal without adjusting the volume of the sound played and have no influence on others.

As a preferred solution, the first wireless communication module 1 and the second wireless communication module 2 adopt short-range wireless transmission techniques, such as Bluetooth, WiFi, near-field communication (NFC), ZigBee, ultra wide band (UWB), and a hearing instrument body area network (HIBAN). Preferably, the first wireless communication module 1 adopts a low power wireless transmission technique, such as Bluetooth low energy or near-field communication. Preferably, the first wireless communication module 1 may also adopt a low power wireless transmission technique based on a dedicated communication protocol, such as dedicated 2.4 GHz wireless communication or HIBAN for hearing aids. Preferably, the first wireless communication module and the second wireless communication module adopt different short-range wireless transmission techniques. For example, the second wireless communication module 2 may adopt a wireless transmission technique with a relatively longer transmission distance such as Bluetooth and WiFi such that the wireless communication apparatus 100 is in wireless communication with a device such as a smart television or a speaker at a long distance. Since the patient with the hearing impairment needs to wear the hearing aid for a long time, the endurance capability of the hearing aid is incredibly important. The first wireless communication module 1 matching the hearing aid adopts a low power communication manner so that the hearing aid can avoid the use of high power Bluetooth communication, thereby guaranteeing the endurance of the hearing aid. In addition, the second wireless communication module 2 adopts Bluetooth or WiFi that is supported by most smart devices so that the hearing aid can connect with as many smart devices as possible by means of the wireless communication apparatus 100, thereby meeting the requirements of patients with hearing impairments.

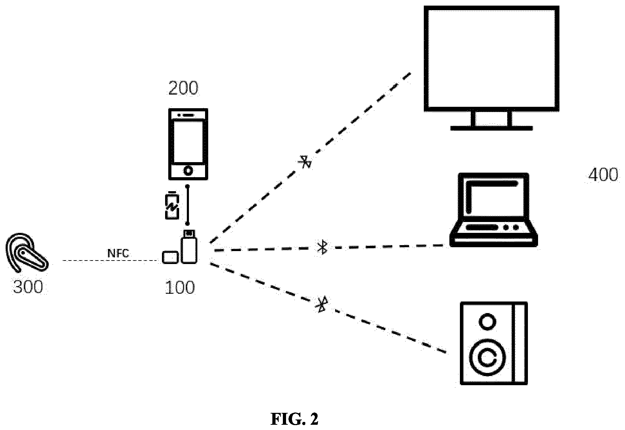

With reference to FIG. 2, there is shown one implementation of an embodiment of a wireless communication apparatus 100 for a hearing aid. This implementation takes as an example that the first wireless communication module 1 adopts low power NFC (assuming that the distance between a portable terminal and the hearing aid is short enough to allow a wireless NFC signal to be received) and the second wireless communication module 2 adopts Bluetooth, which, however are not limited to the two wireless communication manners. The wireless communication apparatus 100 is in connection with a portable apparatus 200 such as a smart phone by means of a first communication interface 3 directly. The first communication interface 3 is connected to a microphone input port, an audio output port, or a charging port of the smart phone so as to obtain from the port electric energy for use by the wireless communication apparatus 100. Specifically, the first communication interface 3 may be a USB interface, such as a Micro universal serial bus (USB), a lightning interface, or a Type-c interface.

As a preferred solution, the portable terminal 200 includes a program configured to acquire a user instruction to control wireless communication between the wireless communication apparatus 100 and an external smart device 400. Preferably, the program may be downloaded from the wireless communication apparatus 100 and installed to the portable terminal 200 by means of the first communication interface 3. The patient does not need to search for and download an installation package additionally. Afterwards, whenever the wireless communication apparatus 100 is connected with the portable terminal 200, the installed program can be started. The program does not need to be installed for a plurality of times and is convenient for the patient to use. For example, the wireless communication apparatus 100 is connected with a smart phone through a Type-c interface and receives electric energy from the smart phone through the Type-c interface for use by itself, and meanwhile, provides a program for an operating system of the smart phone through the Type-c interface and installs the program on the smart phone. The installed application software can redirect an audio signal which is originally used by a speaker of the smart phone to the Type-c interface of the smart phone, transmits the audio signal from the Type-c interface of the smart phone to the wireless communication apparatus 100, and wirelessly sends the audio signal to an NFC wireless receiving module of the hearing aid via an NFC wireless sending module on the wireless communication apparatus 100. The hearing aid decodes the received audio signal, and reproduces the decoded audio signal as sound audible to the patient with the hearing impairment and transmits the sound to the ear of the patient through a receiver. Preferably, the installed application software is configured to acquire a user instruction to control wireless communication between the wireless communication apparatus 100 and an external smart device 400. For example, the user switches or selects the external smart device 400 through the application software. For example, the user taps on a suitable button on a user interface to realize Bluetooth pairing or Bluetooth device switching between the wireless communication apparatus 100 and the external smart device 400.

As a preferred solution, the wireless communication apparatus 100 further includes a rechargeable battery (not shown in the figure). That is, the wireless communication apparatus 100 has a rechargeable battery, and therefore, the wireless communication apparatus 100 can be directly charged. The rechargeable battery is used by the wireless communication apparatus 100 when the power of the portable terminal is insufficient. Preferably, the rechargeable battery can be at least partially charged by the electric energy obtained from the portable terminal. When the power of the portable terminal is sufficient, the rechargeable battery can be charged directly by the portable terminal. It is thus avoided that the wireless communication apparatus 100 cannot be used due to insufficient power because the user forgets to charge it.

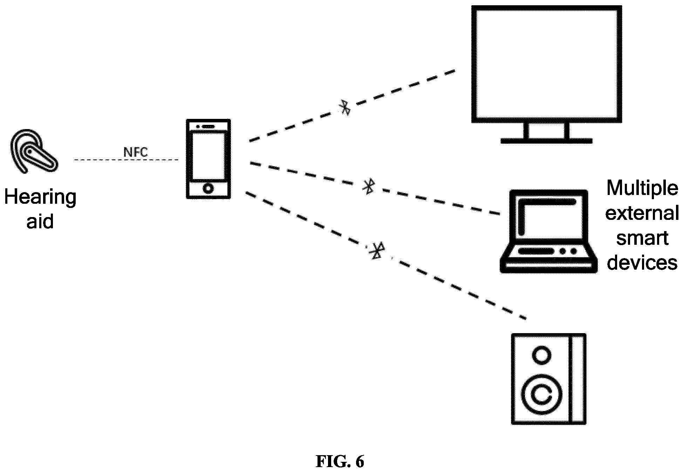

As a preferred solution, the wireless communication apparatus 100 may also be built in the portable terminal 200. As shown in FIG. 6, the portable terminal 200 includes a first wireless communication module and a second wireless communication module, where the first wireless communication module 1 is in wireless connection with the hearing aid 300 so that data on the portable terminal 200 can be wirelessly transmitted to the hearing aid directly; and the second wireless communication module 2 includes a wireless receiver configured to receive data sent by a wireless transmitter of at least one external smart device 400. The portable terminal 200 includes a program configured to acquire a user instruction to control wireless communications between the wireless communication apparatus 100 within the portable terminal 200 and the external smart device 400 and between the wireless communication apparatus 100 and the hearing aid 300.

### Example 2

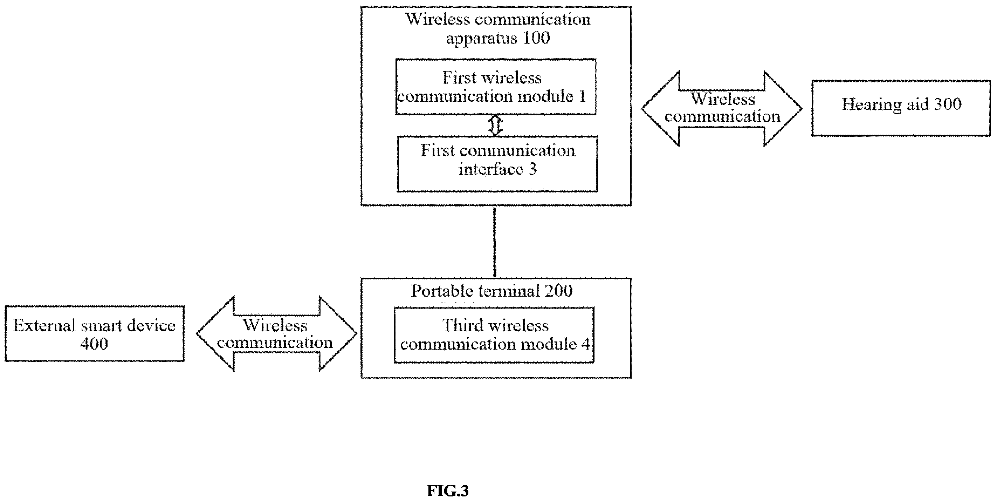

With reference to FIG. 3, there is shown another embodiment of a wireless communication apparatus 100 for a hearing aid. In this embodiment, the wireless communication apparatus 100 for a hearing aid is connected with a portable terminal 200. The wireless communication apparatus 100 includes: a first wireless communication module 1 and a first communication interface 3. The wireless communication apparatus 100 is in wireless communication with the hearing aid 300 by means of the first wireless communication module 1. The wireless communication apparatus 100 is physically connected with the portable terminal 200 by means of the first communication interface 3 and obtains electric energy from the portable terminal 200 by means of the first communication interface 3. Preferably, the wireless communication apparatus 100 may also be in wireless communication with at least one external smart device 400 by means of a third wireless communication module 4 on the portable terminal 200. For example, the portable terminal is a smart phone. The smart phone generally has a wireless communication module, such as Bluetooth, WiFi, near-field communication (NFC), ZigBee, ultra wide band (UWB). The wireless communication apparatus 100 may control, by means of the first communication interface 3, the portable terminal to start the third wireless communication module 4 thereof to be in wireless communication with an external smart device 400 for receiving an audio signal from the external smart device 400, and demodulating and transmitting the audio signal to the first wireless communication module 1 of the wireless communication apparatus 100 by means of the first communication interface 3. The first wireless communication module 1 modulates the received audio signal again and sends the modulated audio signal to the hearing aid 300. The audio signal is processed by the hearing aid 300 and then transmitted to the ear of a patient. Here, the third wireless communication module 4 demodulates the audio signal, and then the demodulated audio signal is reencoded by the portable terminal 200 as data suitable for transmission by the first communication interface 3 and transmitted to the wireless communication apparatus 100. The wireless communication apparatus 100 is connected with the hearing aid 300 by means of the first communication module 1. The hearing aid 300 may be of a single-ear type, i.e., only one hearing aid included, or of a two-ear type, i.e., two hearing aids included. This specific embodiment takes the single-ear hearing aid as an example. The hearing aid 300 is selected depending on a hearing test result of a user given by an audiologist. According to the degree of hearing damage of the user, the type of the hearing aid is determined, such as a single-ear type, a two-ear type, a behind-the-ear type, an in-the-ear type, and an auditory meatus type. The hearing aid 300 includes one or more microphones, a microelectronic circuit with a signal processor, and an acoustic output transducer. Except that the third wireless communication module 4 part in this specific embodiment is different from the second wireless communication module 2 in Example 1, the working principles of other parts are similar to those in the previous embodiment, and thus will not be described redundantly here.

As a preferred solution, the first wireless communication module 1 includes a wireless transmitter configured to send data received by the portable terminal 200 to a wireless receiver of the hearing aid 300. The third wireless communication module 4 includes a wireless receiver configured to receive data sent by a wireless transmitter of at least one external smart device 400. The third wireless communication module 4 further has a demodulation function, and is configured to demodulate the received data and then reencode the demodulated data into a data format suitable for transmission by the first communication interface 3. After the data is transmitted to the first wireless communication module 1 via the first communication interface 3, the data is transmitted to the hearing aid via the first wireless communication module 1. Here, the first wireless communication module 1 may further has decoding and demodulation functions to process the data received by the first communication interface 3 into a data format transmittable by the first wireless communication module 1.

As a preferred solution, the first wireless communication module 1 and the third wireless communication module 4 adopt short-range wireless transmission techniques, such as Bluetooth, WiFi, near-field communication, ZigBee, ultra wide band (UWB), and a hearing instrument body area network (HIBAN). Preferably, the first wireless communication module 1 adopts a low power wireless transmission technique, such as Bluetooth low energy or near-field communication. Preferably, the first wireless communication module 1 may also adopt a low power wireless transmission technique based on a dedicated communication protocol, such as dedicated 2.4 GHz wireless communication or HIBAN for hearing aids. Preferably, the first wireless communication module and the third wireless communication module adopt different short-range wireless transmission techniques. For example, the third wireless communication module adopts a wireless transmission technique with a relatively longer transmission distance such as Bluetooth and WiFi such that the wireless communication apparatus 100 is in wireless communication with an external smart device such as a smart television or a speaker at a long distance. Since the patient with the hearing impairment needs to wear the hearing aid for a long time, the endurance capability of the hearing aid is incredibly important. The first wireless communication module 1 matching the hearing aid adopts a low power communication manner so that the hearing aid can avoid the use of high power Bluetooth communication, thereby guaranteeing the endurance of the hearing aid. In addition, the third wireless communication module directly uses Bluetooth or WiFi on the smart device so that the hearing aid can connect with as many external smart devices as possible while the power consumption of the wireless communication apparatus 100 is guaranteed, thereby meeting the requirements of patients with hearing impairments.

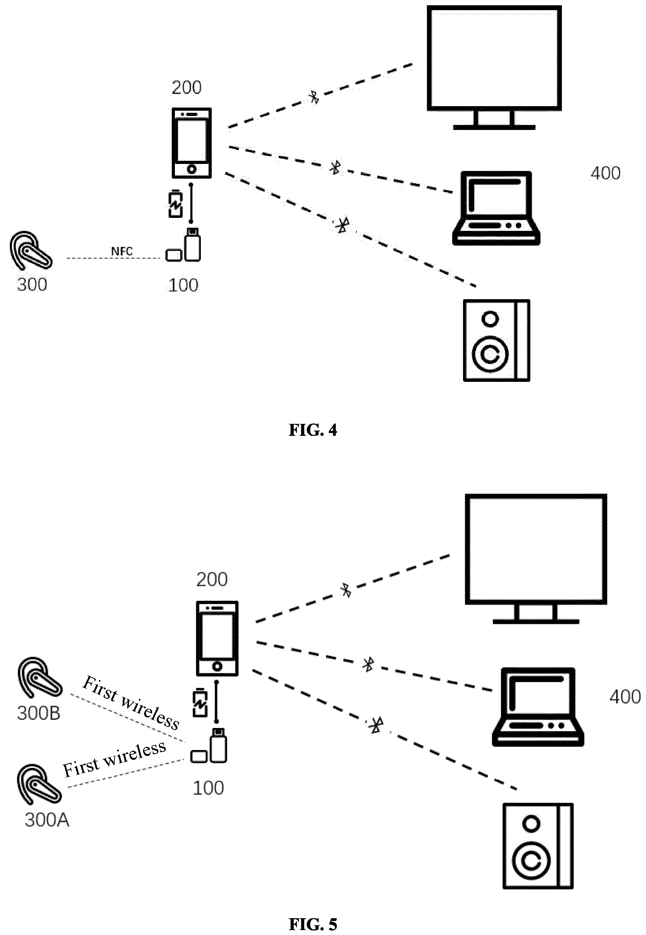

With reference to FIG. 4, there is shown one implementation of an embodiment of a wireless communication apparatus 100 for a hearing aid. This implementation takes as an example that the first wireless communication module 1 adopts low power NFC (assuming that the distance between a portable terminal and the hearing aid is short enough to allow a wireless NFC signal to be received) and the third wireless communication module 4 adopts Bluetooth, which, however are not limited to the two wireless communication manners. The wireless communication apparatus 100 is in connection with a portable apparatus 200 such as a smart phone by means of a first communication interface 3 directly. The first communication interface 3 is connected to a microphone input port, an audio output port, or a charging port of the smart phone so as to obtain from the port electric energy for use by the wireless communication apparatus 100. The first communication interface 3 may be a USB interface, such as a Micro universal serial bus (USB), a lightning interface, or a Type-c interface.

As a preferred solution, the portable terminal 200 includes a program configured to acquire a user instruction to control the portable terminal to start the third wireless communication module 4 thereof to be in wireless communication with an external smart device 400 for realizing wireless communication control between the wireless communication apparatus 100 and the external smart device 400. Preferably, the program may be downloaded from the wireless communication apparatus 100 and installed to the portable terminal 200 by means of the first communication interface 3.

### Example 3

With reference to FIG. 5, there is shown another embodiment of a wireless communication apparatus 100 for a hearing aid. In this embodiment, the wireless communication apparatus 100 for a hearing aid is connected with a portable terminal 200. The wireless communication apparatus 100 is connected with both a hearing aid 300A and a hearing aid 300B in a first wireless communication manner. That is, the hearing aid connected with the wireless communication apparatus 100 is a two-ear type hearing aid system. The hearing aid 300A and the hearing aid 300B are located in two ears of the user and independently receive an audio signal sent via the wireless communication apparatus 100 for playing. The first wireless communication module 1 of the wireless communication apparatus 100 wirelessly transmits the audio signal to the hearing aid 300A and the hearing aid 300B separately. The audio signal is processed separately by the hearing aids and then transmitted to the ears of a patient with a hearing impairment through respective receivers. The audio signal of the wireless communication apparatus 100 may be an audio signal of a television drama played on an external smart device 400 such as a television, and the audio signal is wirelessly transmitted to the second wireless communication module 2 of the wireless communication apparatus 100. The second wireless communication module 2 receives and demodulates the audio signal, and then modulates and wirelessly transmits the demodulated audio signal to the hearing aid 300A and the hearing aid 300B separately via the first wireless communication module 1. The audio signal of the wireless communication apparatus 100 may also be an audio signal played on an external smart device 400 such as a television that is received by a third wireless communication module 4 on the portable terminal 200, and the audio signal is demodulated and then transmitted to the first wireless communication module 1 of the wireless communication apparatus 100 through a first communication interface 3. The received audio signal is modulated by the first wireless communication module 1 again and wirelessly sent to the hearing aid 300A and the hearing aid 300B separately. This transmission manner enables the audio signal to be wirelessly transmitted to the hearing aid 300A and the hearing aid 300B directly. That is, the audio signal is independently provided to each hearing air to realize two-ear synchronization, and does not need to be forwarded. A delay of the two-ear hearing aids due to the need of forwarding the audio signal from the hearing aid 300A to the hearing aid 300B is reduced. A time difference of the two-ear hearing aids in receiving sound is eliminated. Echoing occurring during a conversation of a patient with hearing impairment in two ears is avoided. The user experience is enhanced.

The first wireless communication module 1 adopts a short-range wireless transmission technique supporting two-way transmission. The second wireless communication module 2 and the third wireless communication module 4 both adopt short-range wireless transmission techniques, such as Bluetooth, WiFi, near-field communication, ZigBee, ultra wide band (UWB), and a hearing instrument body area network (HIBAN). Preferably, the first wireless communication module 1 adopts a low power wireless transmission technique, such as Bluetooth low energy or near-field communication, and supports two-way transmission, such as a multi-stream audio technique. Preferably, the first wireless communication module 1 may also adopt a low power wireless transmission technique based on a dedicated communication protocol, such as dedicated 2.4 GHz wireless communication or HIBAN for hearing aids. Preferably, the first wireless communication module and the third wireless communication module or the first wireless communication module and the second wireless communication module adopt different short-range wireless transmission techniques. For example, the third wireless communication module or the second wireless communication module adopts a wireless transmission technique with a relatively longer transmission distance such as Bluetooth and WiFi such that the wireless communication apparatus 100 is in wireless communication with an external smart device such as a smart television or a speaker at a long distance. Since the patient with the hearing impairment needs to wear the hearing aid for a long time, the endurance capability of the hearing aid is incredibly important. The first wireless communication module 1 matching the hearing aid adopts a low power communication manner so that the hearing aid may avoid the use of high power Bluetooth communication, thereby guaranteeing the endurance of the hearing aid.

### Example 4

With reference to FIG. 1 and FIG. 4, a wireless communication system of a hearing aid includes at least: the wireless communication apparatus for a hearing aid as described in Example 1 and Example 2, a portable terminal, a hearing aid, and an external smart device. The wireless communication apparatus is connected with the portable terminal; the wireless communication apparatus is in wireless communication with the hearing aid; and the portable terminal is in wireless communication with the external smart device. An audio signal may be transmitted between the hearing aid and the smart device via the wireless communication apparatus; and meanwhile, the wireless communication apparatus is connected with the portable terminal to transmit data and obtain electric energy for use by a patient with a hearing impairment.

Compared with the prior art, the embodiments of the present disclosure have following beneficial effects:
The present disclosure provides a wireless communication apparatus for a hearing aid. The wireless communication apparatus is connected with a portable terminal and includes: a first wireless communication module and a first communication interface. The wireless communication apparatus may be in wireless communication with the hearing aid by means of the first wireless communication module. The wireless communication apparatus may be connected with the portable terminal by means of the first communication interface and obtain electric energy from the portable terminal by means of the first communication interface. Compared with the prior art, the wireless communication apparatus of the present disclosure is directly connected with the portable terminal so as to directly obtain desired electric energy from the portable terminal. Therefore, the wireless communication apparatus does not need to be independently charged by a user. In addition, the wireless communication apparatus can be in direct wireless communication with the hearing aid. Therefore, the hearing aid can wirelessly receive an electric signal from the portable terminal and then convert the electric signal into an audio signal. One electric-acoustic-electric conversion process is reduced as compared with directly receiving the audio signal played by the portable terminal. Sound distortion caused by processing the audio signal for a plurality of times is reduced. Therefore, the wireless communication apparatus for a hearing aid and the wireless communication system of a hearing aid of the present application in the present disclosure can solve the problem of the endurance capability of the wireless communication apparatus while improving sound signals of the hearing aid, bringing about great convenience for a patient with a hearing impairment in use.

The objectives, technical solutions, and beneficial effects of the present disclosure are further described in detail through the above specific embodiments. It should be understood that the above are merely some specific embodiments of the present disclosure, but are not intended to limit the protection scope of the present disclosure. It should be particularly noted that, any modifications, equivalent substitutions, improvements, and the like made by those skilled in the art within the spirit and principle of the present disclosure should be included within the protection scope of the present disclosure.

## Claims

1. A wireless communication apparatus for a hearing aid, connected with a portable terminal and comprising:
a first wireless communication module, wherein the wireless communication apparatus is in wireless communication with the hearing aid by means of the first wireless communication module; and
a first communication interface, wherein the wireless communication apparatus is connected with the portable terminal by means of the first communication interface and obtains electric energy from the portable terminal by means of the first communication interface.

2. The wireless communication apparatus for a hearing aid according to claim 1, wherein the wireless communication apparatus is in wireless communication with at least one external smart device by means of a second wireless communication module on the wireless communication apparatus.

3. The wireless communication apparatus for a hearing aid according to claim 1, wherein the wireless communication apparatus is in wireless communication with at least one external smart device by means of a third wireless communication module on the portable terminal.

4. The wireless communication apparatus for a hearing aid according to claim 2 or 3, wherein the portable terminal comprises a program configured to acquire a user instruction to control the wireless communication between the wireless communication apparatus and the external smart device.

5. The wireless communication apparatus for a hearing aid according to claim 4, wherein the program is downloaded and installed to the portable terminal by means of the first communication interface.

6. The wireless communication apparatus for a hearing aid according to claim 2, wherein the first wireless communication module and the second wireless communication module adopt short-range wireless transmission techniques.

7. The wireless communication apparatus for a hearing aid according to claim 6, wherein the short-range wireless transmission technique of the first wireless communication module is different from the short-range wireless transmission technique of the second wireless communication module.

8. The wireless communication apparatus for a hearing aid according to claim 3, wherein the first wireless communication module and the third wireless communication module adopt short-range wireless transmission techniques.

9. The wireless communication apparatus for a hearing aid according to claim 8, wherein the short-range wireless transmission technique of the first wireless communication module is different from the short-range wireless transmission technique of the third wireless communication module.

10. The wireless communication apparatus for a hearing aid according to claim 6 or 8, wherein the first wireless communication module adopts a low power wireless transmission technique.

11. The wireless communication apparatus for a hearing aid according to claim 1, wherein the wireless communication apparatus comprises a rechargeable battery which is at least partially rechargeable by the electric energy obtained from the portable terminal.

12. The wireless communication apparatus for a hearing aid according to claim 2, wherein the first wireless communication module is a wireless transmitter configured to send data received by the wireless communication apparatus to a wireless receiver of the hearing aid; and
the second wireless communication module is a wireless receiver configured to receive data sent by a wireless transmitter of the at least one external smart device.

13. The wireless communication apparatus for a hearing aid according to claim 3, wherein the first wireless communication module is a wireless transmitter configured to send data received by the portable terminal to a wireless receiver of the hearing aid; and
the third wireless communication module is a wireless receiver configured to receive data sent by a wireless transmitter of the at least one external smart device.

14. A wireless communication system of a hearing aid, comprising at least:
the wireless communication apparatus for a hearing aid according to any one of claims 1 to 13, a portable terminal, a hearing aid, and an external smart device, wherein the wireless communication apparatus is connected with the portable terminal; the wireless communication apparatus is in wireless communication with the hearing aid; and the portable terminal is in wireless communication with the external smart device.
